(19) Europäisches Patentamt
European Patent Office
Office européen des brevets

(11) EP 0 527 685 B1

(12) **FASCICULE DE BREVET EUROPEEN**

(45) Date de publication et mention de la délivrance du brevet: **03.01.1996 Bulletin 1996/01**

(51) Int. Cl.[6]: **C01G 56/00**, C01G 57/00, C22B 60/02

(21) Numéro de dépôt: **92402277.5**

(22) Date de dépôt: **12.08.1992**

# (54) Procédé pour séparer les actinides des lanthanides par extraction sélective des actinides dans un solvant organique comprenant un propanediamide

Verfahren zur Trennung der Aktiniden von Lanthaniden durch selektive Extraktion der Aktinide in einem Propandiamid-enthaltenden organischen Lösungsmittel

Process for the separation of the actinides from lanthanides by selective extraction of the actinides in an organic solvent comprising a propane diamide

(84) Etats contractants désignés:
**DE GB IT**

(30) Priorité: **14.08.1991 FR 9110335**

(43) Date de publication de la demande:
**17.02.1993 Bulletin 1993/07**

(73) Titulaire: **COMMISSARIAT A L'ENERGIE ATOMIQUE**
**F-75015 Paris (FR)**

(72) Inventeurs:
- **Cordier, Pierre-Yves**
  **F-75014 Paris (FR)**
- **Cuillerdier, Christine**
  **F-75018 Paris (FR)**
- **Musikas, Claude**
  **F-91440 Bures Sur Yvette (FR)**

(74) Mandataire: **Dubois-Chabert, Guy et al**
**F-75008 Paris (FR)**

(56) Documents cités:
**EP-A- 0 210 928** **FR-A- 1 466 321**

- **JOURNAL OF INORGANIC AND NUCLEAR CHEMISTRY. vol. 41, no. 3, Mars 1979, OXFORD, GB, pages 391 - 395, P.K.KHOPKAR 'EXTRACTION AND ABSORPTION SPECTRA OF AMERICIUM THIOCYANATE COMPLEXES IN XYLENE'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Rank Xerox (UK) Business Services
2.6/3.4

## Description

La présente invention a pour objet un procédé pour séparer les actinides des lanthanides présents à l'état trivalent dans une solution aqueuse nitrique.

De façon plus précise, elle concerne l'extraction sélective des actinides dans un solvant organique contenant un propanediamide.

Dans les installations de retraitement de combustibles nucléaires irradies, on obtient habituellement au premier stade d'extraction de l'uranium et du plutonium, des solutions aqueuses de produits de fission contenant des quantités relativement importantes d'ions trivalents de la série des lanthanides et des actinides. Les effluents aqueux provenant de ces installations contiennent également ces mêmes ions.

Compte tenu de la periode relativement longue des éléments actinides, il est d'un grand intérêt de séparer ceux-ci des solutions aqueuses nitriques afin d'éviter la manipulation de déchets ou d'effluents ayant une activité alpha élevée.

En effet, la présence d'émetteurs alpha à vie longue tels que Pu, Am, Np et Cm rendent le coût du stockage des déchets élevé.

Les procédés connus actuellement pour extraire les actinides présents dans de telles solutions, par exemple les procédés décrits dans les documents FR-A- 2 537 326 et FR-A- 2 585 692, permettent d'extraire les actinides dans un solvant organique quel que soit leur état de valence, mais avec ces procédés, les lanthanides trivalents provenant des produits de fission sont également extraits dans le solvant organique.

En effet, les ions des séries 4f et 5f à l'état trivalent présentent des propriétés chimiques analogues qui rendent leur séparation particulièrement difficile. Pourtant, pour améliorer encore la gestion des déchets, il serait intéressant de séparer les actinides des lanthanides.

Dans Progress in Nuclear Energy, Series III, Process Chemistry, vol. 4, C.E. Stevenson, E.A. Mason, T. Gresky, Editions Pergamon Press, p. 596-598, on a décrit un procédé permettant de séparer les actinides des lanthanides présents dans une solution aqueuse, qui utilise des solutions complexantes très concentrées.

On a aussi envisagé de séparer les actinides des lanthanides par extraction sélective des actinides au moyen d'un extractant organique du type phosphonate dilue dans du paradiisopropyl benzène, en ajoutant un thiocyanate à une solution aqueuse chlorhydrique contenant les lanthanides et les actinides, en vue de favoriser cette séparation, comme il est décrit par Muscatello et al dans Separation Science and Technology, 17(6), p. 859-875, 1982.

Cependant, lorsqu'on veut utiliser ce même principe de séparation avec d'autres extractants neutres tels que le tributyl phosphate ou l'oxyde de trioctylphosphine, on n'atteint pas un résultat satisfaisant, comme il est décrit par Khopkar et al dans J. Inorg. Nucl. Chem. 34, p. 2617-2625, 1972.

En revanche, on peut utiliser ce principe d'extraction avec des extractants anioniques tels que les sels d'ammonium quaternaire comme il est décrit par Gerontopoulos et al, Radiochimica Acta, 4.2, p. 75-78, 1965.La présente invention a précisément pour objet un procédé pour séparer les actinides des lanthanides présents dans une solution aqueuse nitrique, qui permet d'extraire sélectivement les actinides dans un solvant organique, en utilisant un extractant organique neutre plus intéressant que les phosphonates.

Selon l'invention, le procédé pour séparer les actinides des lanthanides présents dans une solution aqueuse nitrique consiste à ajouter à la solution aqueuse nitrique un thiocyanate et à mettre ensuite en contact la solution aqueuse contenant le thiocyanate avec un solvant organique immiscible comprenant au moins un propane diamide de formule :

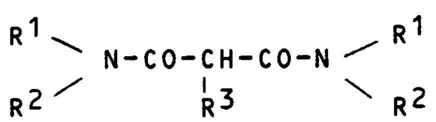

(I)

dans laquelle $R^1$ et $R^2$ qui peuvent être identiques ou différents, représentent un radical alkyle linéaire ou ramifie ayant de 1 à 15 atomes de carbone ou un radical de formule :

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0 ; et $R^3$ représente un atome d'hydrogène, un radical alkyle de 1 à 25 atomes de carbone ou un radical de formule :

$$-(CH_2)_n-Z-(CH_2)_m-O-R^4$$

dans laquelle n, m, Z et $R^4$ ont la signification donnée ci-dessus, pour extraire sélectivement les actinides dans le solvant organique.

Dans ce procédé, l'adjonction de thiocyanate à la solution aqueuse permet au diamide de formule (I) qui est un extractant neutre, d'extraire les espèces métalliques présentes dans la solution aqueuse sous la forme de complexes neutres de formule $M(SCN)_3$ dans laquelle M est l'espèce métallique extraite. Etant donné que le thiocyanate est un ligand "mou" qui complexe préférentiellement les ions 5f, le diamide extrait de ce fait préférentiellement les ions 5f, c'est-à-dire les actinides, et les sépare ainsi des lanthanides.

Le thiocyanate ajoute à la phase aqueuse est un sel de l'acide thiocyanique dont le cation peut être échangé facilement par les actinides à extraire.

A titre d'exemple de thiocyanates utilisables, on peut citer le thiocyanate d'ammonium et les thiocyanates de métaux alcalins tels que le sodium ou le potassium.

La quantité de thiocyanate ajoutée dépend en particulier des quantités d'actinide à extraire. Généralement, la concentration en thiocyanate de la solution aqueuse est de 0,01 à 2mol/l.

Dans ce procédé, l'utilisation de thiocyanate avec un propanediamide est particulièrement intéressante car les propanediamides ont l'avantage de pouvoir être incinérés, de ne 'pas donner de produits de dégradation gênants et d'être faciles à synthétiser et à purifier, ce qui est très avantageux pour une utilisation en milieu actif.

De plus, on obtient avec le propanediamide, en milieu thiocyanate, des coefficients de séparation élevés entre les actinides et les lanthanides.

Pour mettre en oeuvre le procédé de l'invention, on peut utiliser divers propanediamides de formule (I) ; toutefois, on préfère généralement utiliser un propanediamide de formule (I) dans laquelle $R^1$ et $R^2$ qui peuvent être identiques ou différents sont des radicaux alkyle, de préférence de 1 à 4 atomes de carbone, et $R^3$ est un radical alkyle ou le radical de formule

$$-(CH_2)_n-Z-(CH_2)_m-O-R^4,$$

de préférence un radical alkyle de 12 à 25 atomes de carbone, car l'emploi de tels substituants permet l'usage de diluants aliphatiques.

A titre d'exemple de propanediamide utilisable, on peut citer celui répondant à la formule :

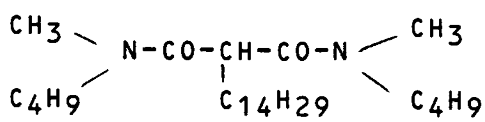

(II)

Les propanediamides de formule (I) peuvent être préparés par des procédés classiques, en particulier par les procédés décrits dans FR-A- 2 585 700.

Ainsi, on peut les préparer à partir des propanediamides tétrasubstitués de formule :

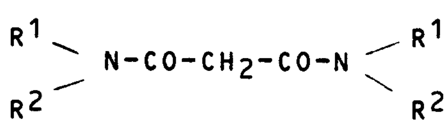

(III)

dans laquelle $R^1$ et $R^2$ ont la signification donnée ci-dessus, par réaction avec le n-butyl lithium suivie d'une condensation avec un halogénure de formule $R^3X$ dans laquelle X représente un atome d'halogène.

Les halogénures de formule $R^3X$ sont de préférence des bromures ou des iodures, et ils peuvent être préparés, lorsque $R^3$ comprend un groupement éther-oxyde, en utilisant le procédé décrit par F.C. Cooper et M.W. Partridge dans J. Chem. Soc., (1950), p. 459.

Les propanediamides tétrasubstitués utilisés comme produits de départ peuvent être préparés par amination du chlorure de malonyle au moyen des amines correspondantes de formule :

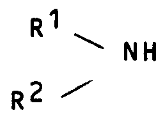

dans laquelle $R^1$ et $R^2$ ont la signification donnée ci-dessus.

Les amines $HNR^1R^2$ peuvent être préparés par des procédés classiques, en particulier par la méthode décrite par J. L. Nelson et R. C. Sentz dans J. Amer. Chem. Soc., vol. 74, p. 1704, (1952).

Lorsqu'on utilise les procédés décrits ci-dessus pour préparer les propanediamides utilisés dans l'invention, le propanediamide obtenu est constitue par un mélange d'isomères.

Selon l'invention, on peut utiliser comme agent d'extraction, l'un de ces isomères ou un mélange de ceux-ci, et l'on précise que les formules données ici représentent indifféremment l'un des isomères ou le mélange d'isomères.

Le solvant organique utilisé dans l'invention comprend généralement, en plus de l'agent d'extraction constitue par au moins un propanediamide de formule (I), un diluant organique qui peut être choisi parmi les diluants aliphatiques tels que le dodécane, le tétrapropylène hydrogéné, les diluants cycliques tels que la décaline, les diluants aromatiques tels que le benzène, le xylène, le mésitylène, le tertiobutylbenzène, et les diluants chlores tels que le tétrachloréthylène.

De préférence, on utilise un diluant aliphatique tel que le tétrapropylène hydrogéné. Dans ce solvant organique, la concentration en propanediamide est choisie en fonction de la teneur en actinides de la solution aqueuse pour obtenir un bon taux d'extraction des actinides. Généralement, la concentration en propanediamide est de 0,1 à 2mol/l.

Toutefois, bien que le taux d'extraction des actinides augmente avec la concentration en propanediamide du solvant organique, on préfère utiliser des concentrations en propanediamide ne dépassant pas 1mol/l pour obtenir une bonne séparation des actinides et des lanthanides.

Dans le procédé de l'invention, la concentration en acide nitrique de la solution aqueuse de départ exerce également une influence sur le taux de séparation. De préférence, la concentration en acide nitrique est inférieure ou égale à 0,5mol/l, par exemple de 0,001 à 0,35mol/l.

Selon un mode de réalisation préféré du procédé de l'invention, le solvant organique comprend de plus un thiocyanate d'ammonium quaternaire ou un mélange de thiocyanate d'ammonium quaternaire que l'on trouve dans le commerce.

En effet, par un effet de synergie, la présence d'un tel sel permet d'améliorer le taux d'extraction des actinides, tout en conservant l'effet de séparation créé par la différence de complexation des thiocyanates, en réalisant une extraction de complexes anioniques au moyen du système sel d'ammonium - propanediamide.

Le(s) thiocyanate(s) d'ammonium quaternaire utilises répondent par exemple à la formule :

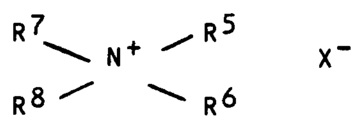

dans laquelle $R^5$, $R^6$, $R^7$ et $R^8$ qui peuvent être identiques ou différents, sont des radicaux alkyle de 1 à 25 atomes de carbone, et $X^-$ est l'anion $SCN^-$.

De préférence, le sel est le thiocyanate de trilaurylméthylammonium.

On peut toutefois préparer le solvant organique contenant le thiocyanate en partant d'autres sels d'ammonium quaternaire, par exemple d'un halogénure tel que le chlorure ou d'un nitrate, qui sont facilement solubles comme les propanediamides dans des diluants organiques tels que le benzène et les alcools lourds. En effet, en mettant ensuite en contact le solvant organique avec une solution aqueuse contenant du thiocyanate, l'anion tel que le chlorure, du sel d'ammonium quaternaire de départ est échangé avec l'ion thiocyanate de la solution aqueuse qui est beaucoup plus lipophile.

On peut aussi introduire directement le sel d'ammonium quaternaire sous la forme de thiocyanate, par exemple en partant du chlorure d'ammonium quaternaire dans un diluant volatil tel que le chlorure de méthylène que l'on met en contact avec une solution concentrée de thiocyanate d'ammonium pour obtenir ensuite par évaporation du diluant du

thiocyanate d'ammonium quaternaire que l'on peut redissoudre dans le diluant organique utilisé dans le solvant organique de l'invention et même dans un diluant comme le tétrapropylène hydrogéné (TPH).

Avantageusement, la concentration en sel d'ammonium quaternaire du solvant organique est de 0,1 à 0,5mol/l.

Pour obtenir les meilleurs résultats, on choisit par ailleurs les concentrations en propanediamide et en sel d'ammonium de façon telle que le rapport molaire du sel d'ammonium au diamide soit de 0,05 à 0,6.

Dans ce mode préféré de réalisation du procédé de l'invention, on suppose que l'extraction des actinides correspond au schéma réactionnel suivant :

$$4SCN^- + M^{3+} + 3\ \text{diam} + AM^+ \rightarrow M(SCN)_4(\text{diam})_3\ AM$$

dans lequel "diam" représente le propanediamide et "$AM^+$ " représente l'ammonium quaternaire.

Ainsi, grâce à l'effet combine des différents ligands $SCN^-$, $AM^+$ et diam, on peut améliorer l'extraction des actinides et leur séparation des lanthanides comme on le verra ci-après.

Avant d'être utilise pour l'extraction sélective des actinides, le solvant organique d'extraction utilise dans l'invention est mis en contact avec une solution aqueuse d'acide nitrique et d'acide thiocyanique ayant des concentrations respectives en acide nitrique et en acide thiocyanique identiques à celles de la solution aqueuse contenant les actinides à séparer.

Cette mise en contact permet de pré-équilibrer le solvant organique pour prévenir toute variation ultérieure de la concentration en $SCN^-$ et en $NO_3^-$ du solvant car les propanediamides sont en effet susceptible d'extraire l'acide thiocyanique et l'acide nitrique.

L'opération de mise en contact est renouvelée trois fois.

Le procédé de l'invention peut être mis en oeuvre dans tout appareillage classique d'extraction tel que des batteries de mélangeurs-décanteurs, des colonnes d'échanges, par exemple des colonnes pulsées, des extracteurs centrifuges, etc.

Généralement, on opère à la pression et à la température ambiante avec des rapports en volume : solution aqueuse / solvant organique qui peuvent varier de 0,1 à 10.

Les actinides extraits sélectivement dans le solvant organique peuvent ensuite être récupérés avec de très bons rendements par réextraction dans une phase aqueuse nitrique très diluée ($5.10^{-3}$M).

D'autres caractéristiques et avantages de l'invention apparaîtront mieux à la lecture des exemples suivants donnes bien entendu à titre illustratif et non limitatif en référence au dessin annexe.

La figure annexée est un diagramme représentant les variations des coefficients de distribution $D_{Am}$ de l'américium, $D_{Eu}$ de l'europium et $D_{Ce}$ du cérium, en fonction de la concentration en sel d'ammonium quaternaire du solvant organique utilise pour l'extraction.

**Exemple 1** - Extraction sélective de l'américium par le 2-tétradécyl-N-N′-dimethyl-N,-N′-dibutyl-propanediamide.

a) Préparation du 2-tétradecyl-N,N′-diméthyl-N,N′-dibutyl-propanediamide de formule :

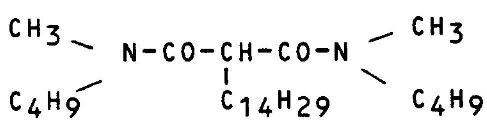

(II)

Dans un réacteur de 1l, balaye par un courant d'argon, on introduit 0,1mol du N,N′-diméthyl-N,N′-dibutyl-propanediamide dissous dans 400ml de tétrahydrofurane. On refroidit à -50°C à l'aide d'un bain d'acétone et de carboglace et on coule une solution de N-butyllithium préparée à partir de 0,1mol de N-butyllithium dans 100ml de tétrahydrofurane anhydre. Dans les mêmes conditions, on coule une solution d'iodure de tétradécyle préparée à partir de 0,1mol d'iodure de tétradécyle et de 100ml de tétrahydrofurane anhydre. La coulée terminée, on laisse remonter la température à l'ambiante, puis on chauffe 3h au reflux du tétrahydrofurane. On laisse refroidir, puis on hydrolyse avec un mélange eau-éthanol. On chasse le tétrahydrofurane et l'on forme ainsi un précipité. On reprend l'ensemble au chlorure de méthylène, on lave à l'eau, on sèche la couche organique, puis on chasse le solvant avant de distiller.

Sa caractérisation par résonance magnétique nucléaire du proton et par dosage potentiométrique confirme qu'il correspond à la formule donnée ci-dessus.

b) Extraction sélective de l'américium.

On part d'une solution aqueuse nitrique ayant une concentration en acide nitrique de 0,001 mol/l qui contient des traces des radioéléments suivants : $^{241}Am$ et $^{152}Eu$.

Conformément à l'invention, on ajoute tout d'abord à cette solution aqueuse du thiocyanate d'ammonium de façon à avoir une concentration en thiocyanate d'ammonium de 0,01mol/l.

Par ailleurs, on prépare un solvant organique en dissolvant 0,477mol/l du propanediamide de formule (II) prépare ci-dessus dans du tetrapropylène hydrogéné, puis on soumet ce solvant organique à un pré-équilibrage en le mettant en contact avec une solution aqueuse contenant 0,001mol/l d'acide nitrique et 0,01mol/l de thiocyanate d'ammonium et on renouvelle cette opération trois fois.

On met ensuite en contact un volume du solvant organique avec un volume de la solution aqueuse, sous agitation, pendant cinq minutes, au vortex, puis on sépare les deux phases par centrifugation. On mesure alors leurs teneurs en $^{241}Am$ et $^{152}Eu$ par spectrométrie gamma et on détermine les coefficients de distribution $D_{Am}$ et $D_{Eu}$ qui correspondent au rapport de la concentration du radioélément (Am ou Eu) dans le solvant organique sur la concentration de ce même élément (Am ou Eu) dans la solution aqueuse.

$$(D_{Am} = \frac{(Am)org}{(Am)aq} \; .$$

On détermine également le facteur de separation $F_s$(Am/Eu) qui correspond au rapport $D_{Am}/D_{Eu}$.

Les résultats obtenus sont donnes dans le tableau 1.

**Exemples 2 à 15.**

On suit le même mode opératoire que dans l'exemple 1 pour extraire sélectivement l'américium à partir d'une solution aqueuse nitrique contenant $^{241}Am$, $^{152}Eu$ et éventuellement $^{144}Ce$, en utilisant le propanediamide de l'exemple 1 dans du tetrapropylène hydrogéné avec les concentrations en propanediamide, en acide nitrique et en thiocyanate d'ammonium données dans le tableau 1.

Les résultats obtenus c'est-à-dire les coefficients de distribution $D_{Am}$, $D_{Eu}$ et $D_{Ce}$ ainsi que les facteurs de séparation $F_s$(Am/Eu) et $F_s$(Am/Ce) sont également donnes dans le tableau 1.

Au vu de ces résultats, on constate que l'on peut atteindre des facteurs de separation allant jusqu'à 7, associes à des coefficients de distribution utilisables pratiquement en batteries de mélangeurs décanteurs, tout en utilisant un diluant aliphatique qui est couramment employé dans l'industrie nucléaire.

Ceci confirme l'intérêt du procédé de l'invention.

**Exemple 16.**

Dans cet exemple, on utilise un solvant organique constitue par du benzène contenant 0,25mol/l du diamide de formule (II) de l'exemple 1 pour extraire sélectivement l'américium à partir d'une solution aqueuse nitrique ayant une concentration en acide nitrique de 0,07mol/l à laquelle on ajoute 0,1mol/l de thiocyanate d'ammonium.

Comme dans l'exemple 1, on met tout d'abord le solvant organique en contact avec une solution aqueuse contenant 0,07mol/l d'acide nitrique et 0,1mol/l de thiocyanate d'ammonium pour prééquilibrer le solvant avant de l'utiliser pour l'extraction et on renouvelle cette opération trois fois.

On met ensuite en contact un volume du solvant organique qui a été prééquilibré, avec un volume de solution aqueuse à la température ambiante sous agitation pendant 5min au vortex, puis on sépare les deux phases par centrifugation et on détermine les coefficients de distribution de chaque radioélément ($D_{Am}$, $D_{Eu}$ et $D_{Ce}$) ainsi que les facteurs de séparation $F_s$(Am/Eu) et $F_s$(Am/Ce) comme dans l'exemple 1.

Les résultats obtenus sont donnes dans le tableau 2.

**Exemples 17 à 24.**

On suit le même mode opératoire que dans l'exemple 16 pour extraire sélectivement l'américium à partir d'une solution aqueuse contenant des traces de $^{241}Am$, $^{152}Eu$ et $^{144}Ce$ et ayant les mêmes concentrations en acide nitrique et en acide thiocyanique que la solution aqueuse de l'exemple 16, mais on utilise comme solvant organique du benzène contenant le propanediamide de formule (II) de l'exemple 1 et du chlorure de trilaurylméthylammonium (TLMA) avec une concentration totale en ces deux extractants de 0,25mol/l, et le pourcentage molaire de chlorure de trilaurylméthylammonium donne dans le tableau 2.

Comme précédemment, on détermine les coefficients de distribution et les facteurs de séparation obtenus dans ces conditions. Les résultats sont donnes dans le tableau 2.

Au vu de ces résultats, on constate que l'on améliore de façon importante les facteurs de separation américium / europium et américium / cérium.

Ces résultats sont également donnés sur la figure 1 annexée qui est un diagramme représentant l'évolution des différents coefficients de distribution $D_M$ de $^{241}Am$, $^{152}Eu$ et $^{144}Ce$ en fonction du pourcentage molaire de trilaurylméthylammonium (TLMA).

La forme caractéristique des courbes obtenues met en évidence le synergisme entre les deux extractants.

**Exemple 25.**

Dans cet exemple, on utilise un solvant organique comprenant le propanediamide de l'exemple 1 et du thiocyanate de trilaurylméthylammonium.

Pour obtenir ce solvant, on part de chlorure de trilaurylméthylammonium que l'on dissout dans un diluant organique volatil tel que le chlorure de méthylène, on met ensuite en contact ce chlorure de TLMA avec une solution concentrée de thiocyanate d'ammonium pour réaliser l'échangé $Cl^-/SCN^-$ puis on évapore le diluant organique. On peut dissoudre ensuite ce produit dans le mélange TPH - diamide et on peut ainsi obtenir un solvant organique comprenant 0,5mol/l du propanediamide de l'exemple 1 et 0,2mol/l du sel de trilaurylméthylammonium dissous dans du tetrapropylène hydrogéné.

Après avoir pré-équilibré ce solvant trois fois avec une solution aqueuse contenant 0,07mol/l d'acide nitrique et 0,1mol/l de thiocyanate d'ammonium, on met celui-ci en contact avec une solution aqueuse à 0,07mol/l d'acide nitrique et 0,1mol/l de thiocyanate d'ammonium, contenant des traces d'américium, d'europium et de cérium, pendant 5min sous agitation au vortex, puis on sépare les phases par centrifugation et on détermine les coefficients de distribution des éléments Am, Eu et Ce ainsi que les facteurs de separation Am/Eu et Am/Ce par spectrométrie gamma.

Les résultats obtenus sont donnes dans le tableau 3.

**Exemple 26.**

Dans cet exemple, on suit le même mode opératoire que dans l'exemple 25, mais on utilise la même concentration (0,25mol/l) en diamide et en chlorure de tri laurylméthylammonium dans le tetrapropylène hydrogéné.

Les résultats obtenus sont également donnés dans le tableau 3.

Au vu de ces résultats, on remarque que l'utilisation de 0,25mol/l de propanediamide et de 0,25mol/l de chlorure de trilaurylméthylammonium permet d'obtenir des facteurs de separation très élevés.

**TABLEAU 1**

| | ex 1 | ex 2 | ex 3 | ex 4 | ex 5 | ex 6 | ex 7 | ex 8 | ex 9 |
|---|---|---|---|---|---|---|---|---|---|
| Propanediamide de formule (II) | 0,477 | 0,477 | 0,477 | 0,477 | 0,477 | 0,477 | 0,477 | 0,477 | 0,477 |
| $HNO_3$ (mol/L) | 0,001 | 0,001 | 0,001 | 0,001 | 0,13 | 0,13 | 0,13 | 0,13 | 0,13 |
| $NH_4SCN$ (mol/L) | 0,01 | 0,05 | 0,1 | 0,5 | 0,01 | 0,04 | 0,08 | 0,1 | 0,15 |
| $D_{Am}$ | 0,13 | 9,30 | 41,3 | 101 | 0,037 | 2,23 | 16,55 | 28,44 | 54,9 |
| $D_{Eu}$ | 0,021 | 1,54 | 7,46 | 127 | 0,008 | 0,34 | 2,81 | 5,08 | 18,8 |
| $F_s$ | 6,2 | 6,1 | 5,5 | 0,8 | 4,8 | 6,5 | 5,9 | 5,6 | 2,9 |

**TABLEAU 1 (suite)**

| | ex 10 | ex 11 | ex 12 | ex 13 | ex14 | ex15 |
|---|---|---|---|---|---|---|
| Propanediamide de formule (II) (mol/l) | 0,245 | 0,245 | 0,245 | 0,245 | 0,245 | 0,245 |
| $HNO_3$ (mol/l) | 0,33 | 0,33 | 0,33 | 0,33 | 0,33 | 0,33 |
| $NH_4SCN$ (mol/l) | 0,1 | 0,2 | 0,25 | 0,3 | 0,35 | 0,40 |
| $D_{Am}$ | 0,3 | 10,22 | 13,30 | 43,50 | 55,5 | 157,31 |
| $D_{Eu}$ | 0,05 | 1,77 | 2,58 | 9,30 | 13,01 | 24,07 |
| $D_{Ce}$ | | 1,74 | 3,94 | 14,18 | 22,34 | 35,65 |
| $F_s$Am/Eu | 6,1 | 5,8 | 5,1 | 4,7 | 4,3 | 6,5 |
| $F_s$ Am/Ce | | 5,9 | 3,4 | 3,1 | 2,5 | 4,4 |

## TABLEAU 2

| | ex 16 | ex 17 | ex 18 | ex 19 | ex 20 | ex 21 | ex 22 | ex23 | ex 24 |
|---|---|---|---|---|---|---|---|---|---|
| TLMA (% en mol) | 0 | 10 | 15 | 25 | 30 | 40 | 60 | 80 | 100 |
| $D_{Am}$ | 0,22 | 1,63 | 2,07 | 2,36 | 2,31 | 2,24 | 0,98 | 0,33 | 0,046 |
| $D_{Eu}$ | 0,032 | 0,093 | 0,10 | 0,12 | 0,12 | 0,13 | 0,074 | 0,015 | 0,002 |
| $D_{Ce}$ | 0,016 | 0,039 | 0,047 | 0,064 | 0,045 | 0,052 | 0,024 | 0,044 | - |
| $F_s$ (am/Eu) | 6,8 | 17,6 | 20,5 | 19,7 | 18,5 | 17,8 | 13,3 | 22,2 | 1,9 |
| $F_s$ (Am/Ce) | 13,2 | 41,8 | 44,1 | 36,9 | 48,9 | 43,3 | 41,2 | 73,8 | |

TABLEAU 3

| | ex 25 | ex 26 |
|---|---|---|
| Diamide de l'exemple 1 (mol/l) | 0,5 M | 0,25M |
| TLMA (mol/l) | 0,20 M | 0,25M |
| $HNO_3$ (mol/l) | 0,07 | 0,07 |
| $NH_4SCN$ (mol/l) | 0,1 | 0,1 |
| $D_{Am}$ | 6,26 | 12,00 |
| $D_{Eu}$ | 3,09 | 0,76 |
| $D_{Ce}$ | 1,84 | 0,36 |
| $F_s$ Am/Eu | 2,0 | 15,8 |
| $F_s$ Am/Ce | 3,4 | 33,2 |

## Revendications

1. Procédé pour séparer les actinides des lanthanides présents dans une solution aqueuse nitrique, caractérisé en ce qu'il consiste à ajouter à la solution aqueuse nitrique un thiocyanate et à mettre ensuite en contact la solution aqueuse contenant le thiocyanate avec un solvant organique immiscible comprenant au moins un propanediamide de formule :

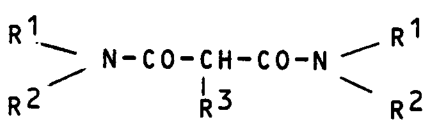

(I)

dans laquelle $R^1$ et $R^2$ qui peuvent être identiques ou différents, représentent un radical alkyle linéaire ou ramifié ayant de 1 à 15 atomes de carbone ou un radical de formule :

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0 ; et $R^3$ représente un atome d'hydrogène, un radical alkyle de 1 à 25 atomes de carbone ou un radical de formule :

$$-(CH_2)_n-Z-(CH_2)_m-O-R^4$$

dans laquelle n, m, Z et $R^4$ ont la signification donnée ci-dessus, pour extraire sélectivement les actinides dans le solvant organique.

2. Procédé selon la revendication 1, caractérisé en ce que le thiocyanate est un thiocyanate de métal alcalin ou d'ammonium.

3. Procédé selon l'une quelconque des revendications 1 et 2, caractérisé en ce que la concentration en thiocyanate de la solution aqueuse est de 0,01 à 2mol/l.

4. Procédé selon l'une quelconque des revendications 1 à 3, caractérisé en ce que, dans la formule (I), $R^1$ et $R^2$ qui peuvent être identiques ou différents, sont des radicaux alkyle en $C_1$ à $C_4$, et $R^3$ est un radical alkyle en $C_{12}$ à $C_{25}$.

5. Procédé selon la revendication 4, caractérisé en ce que le diamide répond à la formule :

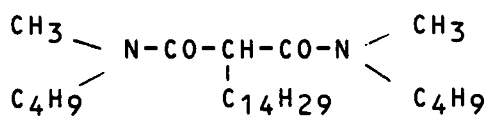

6. Procédé selon l'une quelconque des revendications 1 à 5, caractérisé en ce que le solvant organique comprend un diluant organique choisi parmi les diluants aliphatiques, les diluants aromatiques et les diluants chlorés.

7. Procédé selon la revendication 6, caractérisé en ce que le diluant organique est du tétrapropylène hydrogéné.

8. Procédé selon l'une quelconque des revendications 1 à 7, caractérisé en ce que la concentration en diamide du solvant organique est de 0,1 à 2mol/l.

9. Procédé selon l'une quelconque des revendications 1 à 8, caractérisé en ce que la concentration en acide nitrique de la solution aqueuse est de 0,001 à 0,5mol/l.

10. Procédé selon l'une quelconque des revendications 1 à 9, caractérisé en ce que le solvant organique comprend de plus un thiocyanate d'ammonium quaternaire ou un mélange de thiocyanate d'ammonium quaternaire.

11. Procédé selon la revendication 10, caractérisé en ce que le ou les thiocyanates d'ammonium quaternaire répondent à la formule :

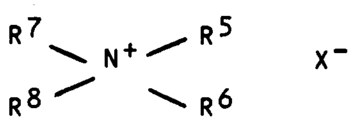

dans laquelle $R^5$, $R^6$, $R^7$ et $R^8$ qui peuvent être identiques ou différents, sont des radicaux alkyle de 1 à 25 atomes de carbone, et $X^-$ est l'anion $SCN^-$.

12. Procédé selon la revendication 11, caractérisé en ce que le thiocyanate est le thiocyanate de trilaurylméthyl ammonium.

13. Procédé selon l'une quelconque des revendications 10 à 12, caractérisé en ce que la concentration en thiocyanate d'ammonium quaternaire du solvant organique est de 0,1 à 0,5mol/l.

14. Procédé selon l'une quelconque des revendications 10 à 13, caractérisé en ce que le rapport molaire du thiocyanate d'ammonium quaternaire au diamide est de 0,05 à 0,6.

**Claims**

1. Process for the separation of the actinides from the lanthanides present in an aqueous nitric solution consisting of adding to the aqueous nitric solution a thiocyanate and then contacting the aqueous solution containing the thiocyanate with an immiscible organic solvent incorporating at least one propane diamide of formula:

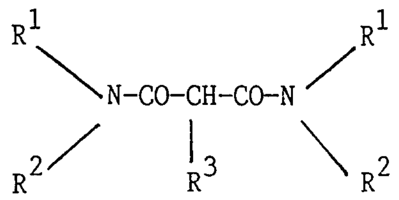

(I)

in which $R^1$ and $R^2$, which can be the same or different, represents a straight or branched-chain alkyl radical having 1 to 15 carbon atoms or a radical of formula:

$$-(CH_2)_n-Z-(CH_2)_m-O-R^4$$

in which $R^4$ is an alkyl radical with 1 to 6 carbon atoms, n is equal to 0 or is an integer from 1 to 6, Z is a single bond or an oxygen atom and m is an integer from 1 to 6, provided that Z is a single bond when n is equal to 0 and $R^3$ represents a hydrogen atom, an alkyl radical having 1 to 25 carbon atoms or a radical of formula:

$$-(CH_2)_n-Z-(CH_2)_m-O-R^4$$

in which n, m, Z and $R^4$ have the meanings given hereinbefore, for the selective extraction of the actinides in an organic solvent.

2. Process according to claim 1, characterized in that the thiocyanate is an ammonium or alkali metal thiocyanate.

3. Process according to either of the claims 1 and 2, characterized in that the thiocyanate concentration of the aqueous solution is 0.01 to 2 mole/l.

4. Process according to any one of the claims 1 to 3, characterized in that, in formula (I), $R^1$ and $R^2$, which can be the same or different, are $C_1$ to $C_4$ alkyl radicals and $R^3$ is a $C_{12}$ to $C_{25}$ alkyl radical.

5. Process according to claim 4, characterized in that the diamide complies with the formula:

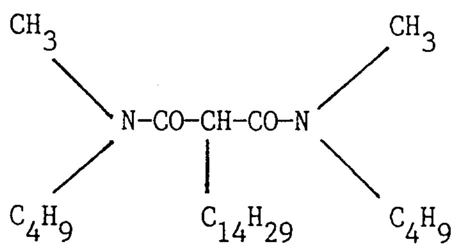

6. Process according to any one of the claims 1 to 5, characterized in that organic solvent comprises an organic diluent chosen from among aliphatic diluents, aromatic diluents and chlorinated diluents.

7. Process according to claim 6, characterized in that the organic diluent is hydrogen tetrapropylene.

8. Process according to any one of the claims 1 to 7, characterized in that diamide concentration of the organic solvent is 0.1 to 2 mole/l.

9. Process according to any one of the claims 1 to 8, characterized in that the nitric acid concentration of the aqueous solution is 0.001 to 0.5 mole/l.

**10.** Process according to any one of the claims 1 to 9, characterized in that the organic solvent also comprises a quaternary ammonium thiocyanate or a quaternary ammonium thiocyanate mixture.

**11.** Process according to claim 10, characterized in that the quaternary ammonium thiocyanates comply with the formula:

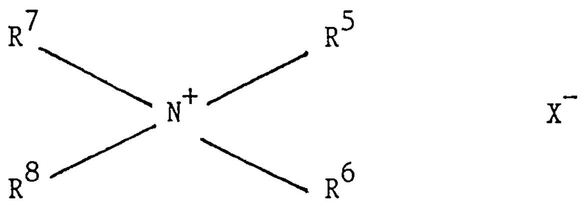

in which $R^5$, $R^6$, $R^7$ and $R^8$, which can be the same or different, are alkyl radicals with 1 to 25 carbon atoms and $X^-$ is the anion $SCN^-$.

**12.** Process according to claim 11, characterized in that the thiocyanate is trilauryl methyl ammonium thiocyanate.

**13.** Process according to any one of the claims 10 to 12, characterized in that quaternary ammonium thiocyanate concentration of the organic solvent is 0.1 to 0.5 mole/l.

**14.** Process according to any one of the claims 10 to 13, characterized in that the molar ratio of the quaternary ammonium thiocyanate to the diamide is 0.05 to 0.6.

**Patentansprüche**

**1.** Verfahren zur Trennung der Actiniden von den Lanthaniden, die in einer wäßrigen Nitrat-Lösung vorhanden sind, dadurch gekennzeichnet, daß es darin besteht, zu der wäßrigen Nitrat-Lösung ein Thiocyanat hinzuzufügen und danach die wäßrige Lösung, die das Thiocyanat enthält, mit einem nicht mischbaren organischen Lösungsmittel in Kontakt zu bringen, das mindestens ein Propandiamid der Formel:

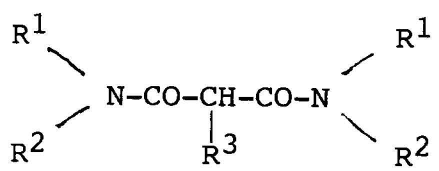

enthält, worin $R^1$ und $R^2$, die gleich oder verschieden sein können, einen linearen oder verzweigen Alkylrest mit 1 bis 15 Kohlenstoffatomen oder einen Rest der Formel:

$$-(CH_2)_n-Z-(CH_2)_m-O-R^4$$

darstellen, worin $R^4$ ein Alkylrest mit 1 bis 6 Kohlenstoffatomen ist, n gleich 0 oder eine ganze Zahl von 1 bis 6 ist, Z eine Einfachbindung oder ein Sauerstoffatom ist und m eine ganze Zahl von 1 bis 6 ist, mit der Maßgabe, daß Z eine Einfachbindung ist, wenn n gleich 0 ist, und $R^3$ ein Wasserstoffatom, einen Alkylrest mit 1 bis 25 Kohlenstoffatomen oder einen Rest der Formel:

$$-(CH_2)_n-Z-(CH_2)_m-O-R^4$$

darstellt, worin n, m, Z und $R^4$ die oben angegebene Bedeutung haben, um selektiv die Actiniden in das organische Lösungsmittel zu extrahieren.

**2.** Verfahren nach Anspruch 1, dadurch gekennzeichnet, daß das Thiocyanat ein Alkalimetall- oder Ammoniumthiocyanat ist.

3. Verfahren nach einem der Ansprüche 1 und 2, dadurch gekennzeichnet, daß die Thiocyanat-Konzentration der wäßrigen Lösung 0,01 bis 2 mol/l beträgt.

4. Verfahren nach einem der Ansprüche 1 bis 3, dadurch gekennzeichnet, daß in Formel (I) $R^1$ und $R^2$, die gleich oder verschieden sein können, Alkylreste mit 1 bis 4 Kohlenstoffatomen sind und $R^3$ ein Alkylrest mit 12 bis 25 Kohlenstoffatomen ist.

5. Verfahren nach Anspruch 4, dadurch gekennzeichnet, daß das Diamid der Formel:

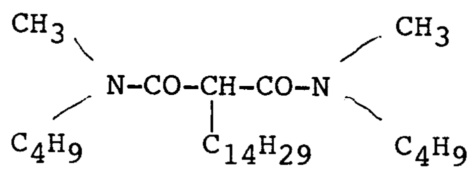

entspricht.

6. Verfahren nach einem der Ansprüche 1 bis 5, dadurch gekennzeichnet, daß das organische Lösungsmittel einen organischen Verdünner enthält, der unter den aliphatischen Verdünnern, den aromatischen Verdünnern und den chlorhaltigen Verdünnern gewählt ist.

7. Verfahren nach Anspruch 6, dadurch gekennzeichnet, daß der organische Verdünner hydriertes Tetrapropylen ist.

8. Verfahren nach einem der Ansprüche 1 bis 7, dadurch gekennzeichnet, daß die Diamid-Konzentration des organischen Lösungsmittels 0,1 bis 2 mol/l beträgt.

9. Verfahren nach einem der Ansprüche 1 bis 8, dadurch gekennzeichnet, daß die Salpetersäure-Konzentration der wäßrigen Lösung 0,001 bis 0,5 mol/l beträgt.

10. Verfahren nach einem der Ansprüche 1 bis 9, dadurch gekennzeichnet, daß das organische Lösungsmittel darüber hinaus ein quartäres Ammoniumthiocyanat oder eine Mischung von quartärem Ammoniumthiocyanat enthält.

11. Verfahren nach Anspruch 10, dadurch gekennzeichnet, daß das oder die quartären Ammoniumthiocyanate der Formel:

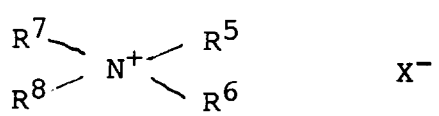

entsprechen, worin $R^5$, $R^6$, $R^7$ und $R^8$, die gleich oder verschieden sein können, Alkylreste mit 1 bis 25 Kohlenstoffatomen sind und $X^-$ das Anion $SCN^-$ ist.

12. Verfahren nach Anspruch 11, dadurch gekennzeichnet, daß das Thiocyanat Trilaurylmethylammoniumthiocyanat ist.

13. Verfahren nach einem der Ansprüche 10 bis 12, dadurch gekennzeichnet, daß die Konzentration des organischen Lösungsmittels an quartärem Ammoniumthiocyanat 0,1 bis 0,5 mol/l beträgt.

14. Verfahren nach einem der Ansprüche 10 bis 13, dadurch gekennzeichnet, daß das Molverhältnis von quartärem Ammoniumthiocyanat zu Diamid 0,05 bis 0,6 beträgt.

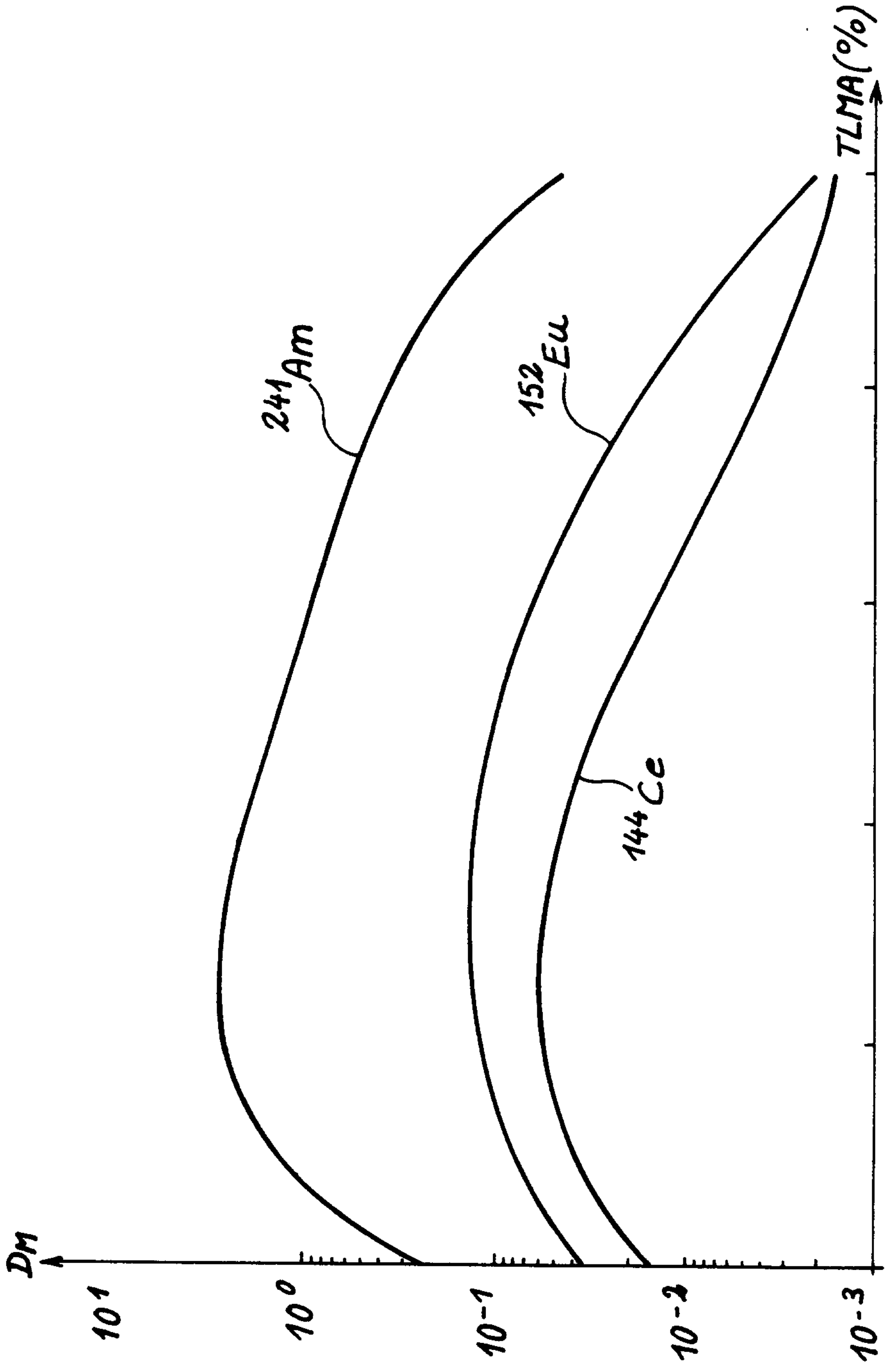
Dm
10 1
10 0
10 -1
10 -2
10 -3
0
20
40
60
80
100
TLMA(%)
241Am
152Eu
144Ce